# EUROPEAN PATENT SPECIFICATION

(11) **EP 4 145 946 B1**
(45) Date of publication and mention of the grant of the patent: **01.01.2025**
(21) Application number: 21809660.0
(22) Date of filing: 20.05.2021
(51) Int. Cl.: H04W 76/10, H04W 76/12

(54) **COMMUNICATION METHOD AND APPARATUS, AND COMPUTER-READABLE STORAGE MEDIUM**
KOMMUNIKATIONSVERFAHREN UND -VORRICHTUNG SOWIE COMPUTERLESBARES SPEICHERMEDIUM
PROCÉDÉ ET APPAREIL DE COMMUNICATION, ET SUPPORT DE STOCKAGE LISIBLE PAR ORDINATEUR

(30) Priority: 22.05.2020 CN 202010444422
(43) Date of publication of application: 08.03.2023
(73) Proprietor: Huawei Technologies Co., Ltd., Longgang District, Shenzhen, Guangdong 518129 (CN)
(72) Inventor: YAO, Qi, Shenzhen, Guangdong 518129 (CN); ZONG, Zaifeng, Shenzhen, Guangdong 518129 (CN)
(74) Representative: Maiwald GmbH
(86) International application number: PCT/CN2021/094987
(87) International publication number: WO 2021/233395

(56) References cited:
- WO-A1-2020/035357
- CN-A- 110 650 504
- CN-A- 110 650 513
- US-A1- 2019 215 724
- HUAWEI ET AL: "Correction on the AF subscribed notification procedures of session & service cotinuity and UP path management scenarios", vol. SA WG2, no. Sapporo, Japan; 20190624 - 20190628, 18 June 2019 (2019-06-18), XP051750729, Retrieved from the Internet <URL:http://www.3gpp.org/ftp/tsg%5Fsa/WG2%5FArch/TSGS2%5F134%5FSapporo/Docs/S2%2D1907635%2Ezip> [retrieved on 20190618]
- "3rd Generation Partnership Project; Technical Specification Group Services and System Aspects; Procedures for the 5G System; Stage 2 (Release 16)", vol. SA WG2, 1 April 2019 (2019-04-01), XP051719174, Retrieved from the Internet <URL:http://www.3gpp.org/ftp/tsg%5Fsa/WG2%5FArch/Latest%5FSA2%5FSpecs/DRAFT%5FINTERIM/23502%2Dg02%5FMCC%5FCorrections%2Ezip> [retrieved on 20190401]
- NOKIA ET AL: "Correcting AMF behaviour for Service Request that is not integrity protected", vol. SA WG2, no. Xi'an, PRC; 20190408 - 20190412, 29 May 2019 (2019-05-29), XP051748760, Retrieved from the Internet <URL:http://www.3gpp.org/ftp/Meetings%5F3GPP%5FSYNC/SA/Docs/SP%2D190401%2Ezip> [retrieved on 20190529]
- ANONYMOUS: "3rd Generation Partnership Project; Technical Specification Group Services and System Aspects; Procedures for the 5G System (5GS); Stage 2 (Release 16)", 3GPP STANDARD; TECHNICAL SPECIFICATION; 3GPP TS 23.502, vol. SA WG2, no. V16.4.0, 31 March 2020 (2020-03-31), pages 1 - 582, XP051861092
- HUAWEI; HISILICON; CATT: "Correction on the AF subscribed notification procedures of session & service cotinuity and UP path management scenarios", 3GPP DRAFT; S2-1907635 23502 CORRECTION ON THE AF SUBSCRIBED NOTIFICATION PROCEDURES OF SESSION & SERVICE COTINUITY AND UP PATH MANAGEMENT SCENARIOS_V3, vol. SA WG2, 18 June 2019 (2019-06-18), Sapporo, Japan, pages 1 - 12, XP051750729

## Description

### TECHNICAL FIELD

Embodiments of the present invention relate to the field of communication technologies, and in particular, to an apparatus and methods.

### BACKGROUND

In a 5th generation (5th generation, 5G) communication system, a terminal device may be connected to a data network (data network, DN) through a user plane function network element (user plane function, UPF). A specific UPF and a specific DN that are used by the terminal device for communication are determined in a session establishment process. After session establishment is completed, because a location of the terminal device is not fixed, when the location of the terminal device changes, a communication path between the terminal device and the DN is long if the terminal device still uses the UPF and the DN that are used in the session establishment process. Document "3rd Generation Partnership Project; Technical Specification Group Services and System Aspects; Procedures for the 5G System; Stage 2 (Release 16), 3GPP DRAFT: 23502-G2_MCC_Corrections", 3GPP, Mobile Competence Centre; 650, Route des Lucioles; F-06921, Sophia-Antipolis Cedex; France, vol. SA WG2 1 April 2019, defines Stage 2 procedures and Network Function Services for the 5G system architecture, which is descried in the TS 23.501 and for the policy and charging control framework which is described in TS 23.503. Nokia et. Al. "Correcting AMF behavior for Service Request that is not integrity protected", 3GPP DRAFT; 23502_CR1262_5GS_PH1_(REL_16)_S2-1903668-ServiceRequest-R16-Mirror, 3GPP, Mobile Competence Centre; 650, Route des Lucioles; F-06921, Sophia-Antipolis Cedex; France, vol. SA WG2, no. Xi'an, PRC; 20190408-20190412, 29 May 2019, corrects 23.502 behavior and refers to appropriate stage 3 TS 24.501.

### SUMMARY

The invention is defined by the appended set of claims. Embodiments of the present invention disclose methods and apparatus, to shorten a communication path between a terminal device and a DN.

According to a first aspect, a communication method is disclosed. The method is applied to an application function network element (application function, AF), An AF receives DN identification information from a session management function network element (session management function, SMF), where the DN identification information includes an identifier of at least one DN that supports serving a first terminal device at a current location; and sends a first message to the SMF when the first terminal device has not accessed a first DN, where the first message includes an identifier of the first DN, the identifier of the at least one DN that supports serving the first terminal device at the current location includes the identifier of the first DN, and the first message is used to establish a data path between a UPF corresponding to the first DN and a classifier node.

### BRIEF DESCRIPTION OF DRAWINGS

FIG. 1 is a schematic diagram of a 5G network architecture according to an embodiment of the present invention;
FIG. 2 is a schematic diagram of a network architecture according to an embodiment of the present invention;
FIG. 3 is a schematic diagram of another network architecture according to an embodiment of the present invention;
FIG. 4 is a schematic flowchart of a communication method according to an embodiment of the present invention;
FIG. 5 is a schematic flowchart of another communication method according to an embodiment of the present invention;
FIG. 6 is a schematic diagram of establishing communication between UE and a local DN according to an embodiment of the present invention;
FIG. 7 is a schematic flowchart of still another communication method according to an embodiment of the present invention;
FIG. 8A and FIG. 8B are a schematic flowchart of still another communication method according to an embodiment of the present invention;
FIG. 9 is a schematic diagram of a structure of a communication apparatus according to an embodiment of the present invention;
FIG. 10 is a schematic diagram of a structure of another communication apparatus according to an embodiment of the present invention;
FIG. 11 is a schematic diagram of a structure of still another communication apparatus according to an embodiment of the present invention;
FIG. 12 is a schematic diagram of a structure of still another communication apparatus according to an embodiment of the present invention;
FIG. 13 is a schematic diagram of a structure of still another communication apparatus according to an embodiment of the present invention; and
FIG. 14 is a schematic diagram of a structure of still another communication apparatus according to an embodiment of the present invention.

### DESCRIPTION OF EMBODIMENTS

Embodiments of the present invention disclose a communication methods and apparatus to shorten a communication path between a terminal device and a DN. Details are separately described in the following.

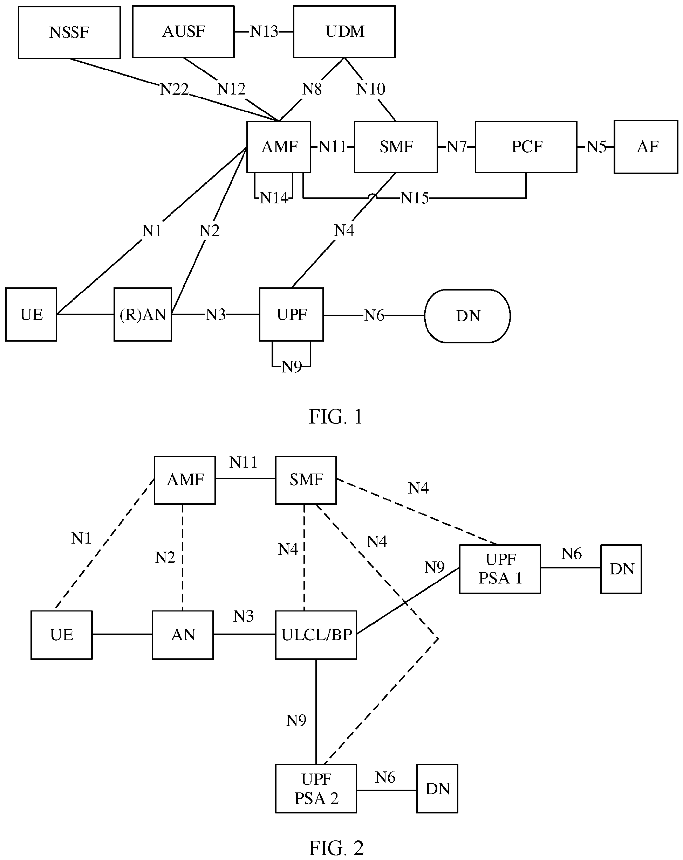

To better understand a communication method and apparatus, disclosed in embodiments of the present invention, the following first describes a network architecture used in embodiments of the present invention. FIG. 1 is a schematic diagram of a 5G network architecture according to an embodiment of the present invention. As shown in FIG. 1, the 5G network architecture may include user equipment (user equipment, UE), a (radio) access network (radio access network, (R)AN) device, a UPF, a DN, an access and mobility management function network element (access and mobility management function, AMF), an SMF, a policy control function network element (policy control function, PCF), an AF, a unified data management network element (unified data management, UDM), an authentication server function network element (authentication server function, AUSF), and a network slice selection function network element (network slice selection function, NSSF). Different network elements or devices may communicate with each other through an interface. A name of an interface shown in FIG. 1 is merely an example for description. This is not specifically limited in embodiments of the present invention.

The UE may also be referred to as a terminal device, a mobile station (mobile station, MS), a mobile terminal (mobile terminal, MT), or the like, and is a device that provides voice and/or data connectivity for a user. The terminal device may be a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, or another device that can access a network. In FIG. 1, the terminal device is merely shown by using UE as an example, and the terminal device is not limited. The UE may access the DN by establishing a session from the UE sequentially to the (R)AN device, the UPF, and then the DN, namely, a protocol data unit (protocol data unit, PDU) session.

The (R)AN device is a device that provides radio access for the UE, and is mainly responsible for functions such as radio resource management, quality of service (quality of service, QoS) flow management, and data compression and encryption on an air interface side. The (R)AN device may include base stations in various forms, such as a macro base station, a micro base station (also referred to as a small cell), a relay station, and an access point. The (R)AN device may further include a wireless fidelity (wireless fidelity, Wi-Fi) access point (access point, AP). The (R)AN device may further include a worldwide interoperability for microwave access (worldwide interoperability for microwave access, WiMax) base station (base station, BS).

The UPF is mainly responsible for processing a user packet, such as forwarding and charging. The user packet may be received from the DN, and transmitted to the UE through the RAN device. Alternatively, the user packet may be received from the UE through the RAN device, and forwarded to the DN. A transmission resource and a scheduling function in the UPF that provide a service for the UE are managed and controlled by the SMF.

The DN may be an internet (internet), an internet protocol (internet protocol, IP) multi-media service (IP multi-media service, IMS) network, a regional network (namely, a local network, for example, a multi-access edge computing (multi-access edge computing, MEC) network), or the like. The DN is a destination that a PDU session of the UE accesses. The DN includes an application server, and the application server may perform data transmission with the UE, to provide a service for the UE.

The AMF may access non-access stratum (non-access stratum, NAS) signaling (including session management (session management, SM) signaling) of the UE through an N1 interface and access RAN signaling through an N2 interface, to complete a UE registration procedure, SM signaling forwarding, and mobility management.

The SMF is mainly responsible for session management in a mobile network, for example, a session establishment, modification, release, or update procedure. For example, specific functions are allocation of an IP address to a user and selection of a UPF that provides a packet forwarding function.

The PCF may be responsible for terminal device policy management, including a mobility related policy and a PDU session related policy, such as a QoS policy and a charging policy.

The AF mainly supports interaction with a 3rd generation partnership project (3rd generation partnership project, 3GPP) core network to provide a service, to affect service flow routing, access network capability exposure, policy control, and the like.

The UDM is responsible for user key management, user identifier processing, subscription data access authorization, UE network function entity management, session and service continuity management, SMS message push, lawful interception, subscription management, SMS message management, and user data management and control, such as subscription information management.

The AUSF may be responsible for performing authentication and authorization on access of the UE.

Each of the foregoing network elements in the core network may also be referred to as a functional entity, and may be a network element implemented on dedicated hardware, or may be a software instance running on dedicated hardware, or an instance of a virtualization function on an appropriate platform. For example, the virtualization platform may be a cloud platform.

It should be noted that the architecture of the communication system shown in FIG. 1 is not limited to including only the network elements shown in the figure, and may further include another device not shown in the figure. Details are not described herein in the present invention one by one.

It should be noted that a distribution form of the network elements in the core network is not limited in embodiments of the present invention. The distribution form shown in FIG. 1 is merely an example, and is not limited in the present invention.

It should be understood that names of all network elements in the present invention are merely used as examples. In future communication, for example, 6G, names of the network elements may also be referred to as other names. Alternatively, in future communication, for example, 6G, the network elements in the present invention may be replaced with other entities, devices, or the like that have a same function. This is not limited in the present invention. Unified descriptions are provided herein, and details are not described below again.

It should be noted that the 5G network architecture shown in FIG. 1 does not constitute a limitation on the 5G network. Optionally, the method in embodiments of the present invention is further applicable to various future communication systems, for example, 6G or another communication network.

There is only one UPF in the 5G network architecture shown in FIG. 1. Based on the foregoing basic architecture, 5G further supports insertion of a plurality of session anchor UPFs on a user plane path of a PDU session, to support a connection to a local (local) DN, so that the UE can access a nearby application server in the local DN. FIG. 2 is a schematic diagram of a network architecture according to an embodiment of the present invention. As shown in FIG. 2, a plurality of UPFs are introduced into an architecture of a communication system. The plurality of UPFs may be respectively an uplink classifier (uplink classifier, ULCL)/branching point (branching point, BP), a UPF PDU session anchor (PDU session anchor, PSA) 1, and a UPF PSA 2. The ULCL/BP may distribute an uplink data packet from UE to the PSA 1 or the PSA 2 according to a distribution rule, or may send a data packet from the PSA 1 or the PSA 2 to UE. There is an N6 interface between the PSA 1 and a DN. For example, the DN may be a DN located in a central data center (data center, DC). There is an N6 interface between the PSA 2 and a local DN. For example, the local DN may be located in a local DC or an MEC node. The local DN may also be understood as deploying an application server in an edge hosting environment (edge hosting environment, EHE) closer to the UE, or may be referred to as an edge network (edge data network, EDN). When the UE has a service requirement, an SMF may insert a UPF (namely, a local (local, L) PSA) corresponding to the local DN, so that the UE can access a nearby application server in the local DN. For example, the PAS 2 in FIG. 2 is an L-PSA. It should be noted that a quantity of UPFs in FIG. 2 is merely an example, and more or fewer UPFs may alternatively be included. This is not limited in the present invention.

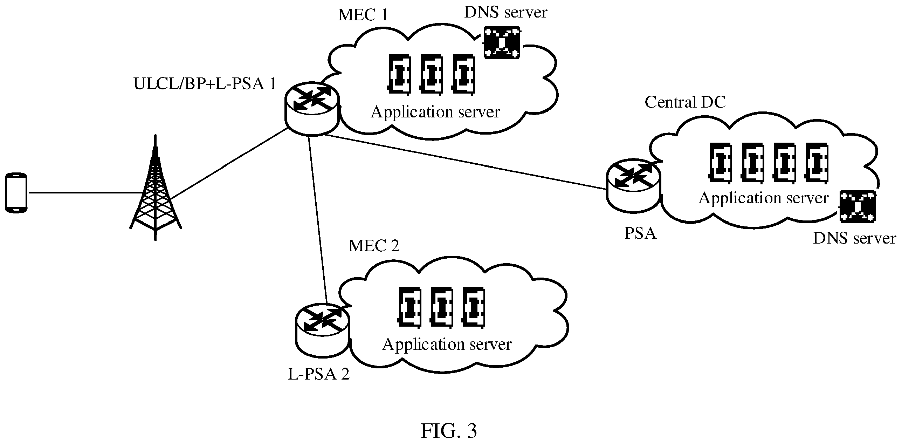

It should be noted that only one L-PSA is shown in FIG. 2. It should be understood that a plurality of L-PSAs may alternatively be included. This is not limited in the present invention. FIG. 3 is a schematic diagram of another network architecture according to an embodiment of the present invention. As shown in FIG. 3, there may be a plurality of L-PSAs in the network architecture, for example, an L-PSA 1 and an L-PSA 2 in FIG. 3. In this network architecture, a ULCL/BP may be connected to the plurality of L-PSAs. In this example, the ULCL/BP may be co-deployed with the L-PSA 1, and is connected to an MEC 1; and the L-PSA 2 may be connected to an MEC 2, and a PSA may be connected to a central DC. It should be understood that the ULCL/BP and the L-PSA 1 may alternatively be two independent network elements or devices.

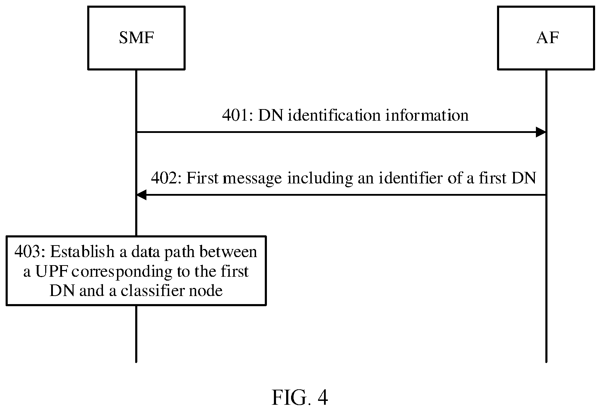

Based on the foregoing network architecture, FIG. 4 is a schematic flowchart of a communication method according to an embodiment of the present invention. A function performed by a terminal device in the present invention may alternatively be performed by a module (for example, a chip) in the terminal device, a function performed by an AF in the present invention may alternatively be performed by a module (for example, a chip) in the AF, and a function performed by an SMF in the present invention may alternatively be performed by a module (for example, a chip) in the SMF. As shown in FIG. 4, the communication method may include the following steps.

401: The SMF sends DN identification information to the AF.

Correspondingly, the AF receives the DN identification information from the SMF.

When there is a service related to a first terminal device, the SMF may send the DN identification information to the AF. The DN identification information may include an identifier of at least one DN that supports serving the first terminal device at a current location; or the DN identification information may include an identifier of at least one DN available to the first terminal device. The identifier of the DN may be an identity of the DN itself. For example, the identifier of the DN may be a data network name (data network name, DNN), or another DN identity (identity, ID). Alternatively, the identifier of the DN may be a DN access identifier. For example, the DN access identifier (DN access identifier, DNAI) may be used to identify a user plane path between a UPF and the DN, and may be considered as an identifier of the DN. Alternatively, the identifier of the DN may be an identifier of an MEC node or a DC, and may be used to indicate a location of the MEC node or the DC. Alternatively, the identifier of the DN may be subnet information of the DN, and a corresponding DN may be determined based on the subnet information. Alternatively, the identifier of the DN may be address information of an application server included in the DN, and a corresponding DN may be determined based on the address information.

It should be noted that, in the present invention, the at least one DN that supports serving the first terminal device at the current location may be a plurality of DNs, namely, two or more DNs.

In addition, the identifier, of the DN, included in the DN identification information may be an identifier of an available DN, and the available DN may alternatively be described as a DN supported by the SMF.

In an implementation, the SMF may configure or obtain a service scope of the DN. The service scope of the DN may be a specific location set, for example, a set of one or more of a tracking area (tracking area, TA) 1, a TA 2, ...; a RAN_1 and a RAN_2; a cell (Cell)_1 and a Cell_2; or the like. Alternatively, the service scope of the DN may be a set of pieces of geographical location information, for example, a longitude and a latitude, or an administrative region. Alternatively, the service scope of the DN may be a set of service scopes of one or more UPFs corresponding to the DN. The one or more UPFs may serve the DN. The service scope of the UPF may be a specific location set or a set of pieces of geographical location information. Alternatively, the service scope of the DN may be identified by a service scope of the application server (application server, AS) and/or an enabler server (enabler server, ES) deployed in the DN. A representation form of the service scope of the AS or the ES is the same as that described above, and details are not described again. In a PDU session establishment process, or when a location of the first terminal device changes, or a related service or event is detected, the SMF may obtain the current location of the first terminal device, for example, a TA 1 or a Cell_1. The SMF may obtain the current location of the first terminal device from an AMF. Alternatively, the SMF may subscribe to location information or a location change related event of the first terminal device from an AMF. Alternatively, the SMF may subscribe to, from an AMF, an event such as movement, of the first terminal device, into or out of the service scope of the DN. After detecting that the first terminal device moves, the AMF may notify the SMF of the current location of the first terminal device in real time. After obtaining the current location of the first terminal device, the SMF may first determine whether the current location of the first terminal device is within the service scope of the DN. If the current location of the first terminal device is within the service scope of the DN, the SMF determines that the DN supports serving the first terminal device at the current location. Assuming that the SMF configures or obtains service scopes of M DNs, after obtaining the current location of the first terminal device, the SMF may determine that N DNs in the M DNs support serving the first terminal device at the current location. Alternatively, another network element or functional entity may determine the DN identification information and then send the DN identification information to the SMF. A process of determining the DN identification information is similar to that performed by the SMF, and details are not described again. Then, the SMF may send the DN identification information to the AF. M is an integer greater than 1, and N is an integer less than or equal to M.

In another implementation, the SMF may determine that a DN adjacent to the current location of the first terminal device is the DN that supports serving the first terminal device at the current location. For example, a distance between the current location of the first terminal device and a location of the DN does not exceed X kilometers. The SMF or another network element may calculate the distance between the current location of the first terminal device and the location of the DN, and then notify the SMF of the distance. Then, the SMF may send the DN identification information to the AF.

In another implementation, the SMF may configure or obtain, from another network element, a DN supported by the SMF. The SMF may determine, as the DN identification information, identifiers corresponding to all DNs supported by the SMF, or determine, as the DN identification information based on a configuration or a policy, an identifier corresponding to a subset of all DNs supported by the SMF. Then, the SMF may send the DN identification information to the AF.

In another implementation, when the first terminal device has inserted a ULCL/BP in a session establishment process, the DN identification information may be an identifier of a DN corresponding to an L-PSA that supports a connection to the ULCL/BP, for example, identifiers of DNs corresponding to an L-PSA 1 and an L-PSA 2 shown in FIG. 3. Assuming that the ULCL/BP may be connected to M L-PSAs, the SMF may determine, as the DN identification information, identifiers of DNs corresponding to the M L-PSAs, or the SMF may determine, as the DN identification information based on a configuration or a policy, identifiers of N DNs in DNs corresponding to the M L-PSAs. Then, the SMF may send the DN identification information to the AF.

In another implementation, a location of the first terminal device may not be considered for the DN identification information sent by the SMF to the AF. For example, the SMF may determine a piece of recommended DN identification information based on a configuration or a policy, or obtain the DN identification information from another network element. This is not limited.

In addition, before, after, or when sending the DN identification information to the AF, the SMF may send, to the AF, the identifier of the DN that has been accessed and/or has not been accessed by the first terminal device.

In an implementation, the SMF may send, to the AF, the identifier of the DN that has been accessed by the first terminal device. Specifically, the SMF may send the identifier of the DN and indication information indicating "access has been performed" to the AF. According to a protocol, a configuration, or another manner reached by the SMF and the AF, if the SMF sends, by default, the identifier of the DN that has been accessed, the SMF may not send the indication information indicating "access has been performed".

In another implementation, the SMF may send, to the AF, the identifier of the DN that has not been accessed by the first terminal device. Specifically, the SMF may send the identifier of the DN and indication information indicating "access has not been performed" to the AF. According to a protocol, a configuration, or another manner reached by the SMF and the AF, if the SMF sends, by default, the identifier of the DN that has not been accessed, the SMF may not send the indication information indicating "access has not been performed".

In another implementation, the SMF may send, to the AF, the identifier of the DN that has been accessed and/or has not been accessed by the first terminal device. Specifically, the SMF may send, to the AF, the DN identification information and indication information indicating that a DN corresponding to an identifier in the corresponding DN identification information indicating "access has been performed and/or has not been performed". A form of the information sent by the SMF to the AF may not be limited. For example, the information may be in a form of a key-value pair, or may be in another form. For example, assuming that the DN identification information includes identifiers of K DNs, the information may be shown in Table 1, or may be shown in Table 2.

**Table 1**

| Identifier of a DN | Status |
|---|---|
| DN 1 | Access has been performed |
| DN 2 | Access has been performed |
| DN 3 | Access has not been performed |
| ... | ... |
| DN K | Access has not been performed |

**Table 2**

| Status | Identifier of a DN |
|---|---|
| Access has been performed | DN 1, DN 2, ..., DNM |
| Access has not been performed | DN 3, DN 4, ..., DN N |

402: When the first terminal device has not accessed a first DN, the AF sends a first message to the SMF.

Correspondingly, the SMF receives the first message from the AF.

After the AF receives the DN identification information from the SMF, when the first terminal device has not accessed the first DN, it indicates that if the first terminal device needs to access the first DN, the first terminal device needs to create a user plane path from the first terminal device to the first DN, namely, a data path, to perform communication. When the first terminal device has accessed the first DN, it indicates that the user plane path from the first terminal device to the first DN has been created, and the AF may not send the first message to the SMF. The first message may include an identifier of the first DN, the identifier of the at least one DN that supports serving the first terminal device at the current location includes the identifier of the first DN, and the AF may select an identifier from the DN identification information as the identifier of the first DN.

When the AF receives, from the SMF, the identifier of the DN that has been accessed and/or has not been accessed by the first terminal device, the AF determines based on the identifier of the DN that has been accessed and/or has not been accessed by the first terminal device, whether the first terminal device has accessed the first DN, to determine whether to send the first message to the SMF. The identifier of the DN that has been accessed and/or has not been accessed by the first terminal device is actively sent by the SMF to the AF.

After receiving the DN identification information from the SMF, and receiving, from the AF, the identifier of the DN that has been accessed and/or has not been accessed by the first terminal device, the AF may determine the first DN based on the DN identification information and the identifier of the DN that has been accessed and/or has not been accessed by the first terminal device. In an implementation, the AF may first determine whether there is an intersection set between the DN identification information and the identifier of the DN that has been accessed by the first terminal device. When there is an intersection set, the AF may select the identifier of the first DN from the intersection set. When there is no intersection set, the AF may select the identifier of the first DN from the DN identification information. When a quantity of identifiers, of DNs, included in the intersection set is greater than 1, the AF may select the identifier of the first DN from the intersection set based on one or more of a priority, a delay, and a load status of the application server or the DN. When there is no intersection set, the AF may alternatively select the identifier of the first DN from the DN identification information based on one or more of a priority, a delay, and a load status of the application server or the DN. In another implementation, if the SMF sends, to the AF, the DN identification information and indication information indicating that a DN corresponding to an identifier in the corresponding DN identification information indicating "access has been performed and/or has not been performed", the AF may preferentially select the identifier of the DN that has been accessed as the identifier of the first DN. If a quantity of selected identifiers of DNs that have been accessed is greater than 1, a selection manner is the same as that described above. Details are not described again.

403: The SMF establishes a data path between a UPF corresponding to the first DN and a classifier node.

After receiving the first message from the AF, the SMF may establish the data path between the UPF corresponding to the first DN and the classifier node, that is, may establish, based on the first message, the data path between the UPF corresponding to the first DN and the classifier node, for example, a data path between the ULCL/BP and the L-PSA 1 shown in FIG. 3. In other words, after receiving the first message from the AF, the SMF reconfigures the data path of the session of the first terminal, including: adding or inserting the UPF corresponding to the first DN and the classifier node. The classifier node may be a ULCL, or may be a BP, or may be another network element or device having an equivalent function. The data path may also be referred to as a user plane path. When no offloading node is inserted into the data path of the session of the first terminal, that is, no offloading node exists, the classifier node may be first inserted, and then the data path between the UPF corresponding to the first DN and the classifier node is established. When the classifier node already exists, that is, the classifier node has been inserted, the path between the UPF corresponding to the first DN and the classifier node may be established. The UPF corresponding to the first DN and the classifier node may be co-deployed, or may be independent.

After receiving the first message from the AF, the SMF establishes in response to the first message, the data path between the UPF corresponding to the first DN and the classifier node. Then, the SMF may send, to the AF, indication information used to indicate whether the data path between the UPF corresponding to the first DN and the classifier node is successfully established. When the establishment succeeds, the indication information used to indicate that the data path between the UPF corresponding to the first DN and the classifier node is successfully established may be sent to the AF, to indicate that the establishment succeeds. When the establishment fails, the indication information used to indicate that the data path between the UPF corresponding to the first DN and the classifier node is unsuccessfully established may be sent to the AF, to indicate that the establishment fails.

The SMF may send an identifier of an application to the AF. The AF may determine the first DN based on the DN identification information, the identifier of the DN that has been accessed and/or has not been accessed by the first terminal device, and the identifier of the application, that is, determine the identifier of the first DN.

In an implementation, the AF may not need to consider which DN does not include or deploy an application server that the first terminal device wants to access. For example, when different DNs include or deploy a same application server, the AF may determine the first DN based on the DN identification information and the identifier of the DN that has been accessed and/or has not been accessed by the first terminal device. In another implementation, when application servers included or deployed in different DNs are different, the AF needs to determine an application server that the first terminal device is accessing/wants to access. In other words, the AF needs to determine an identifier of an application that the first terminal device is accessing/wants to access. In an implementation, the SMF may send, to the AF, an identifier of an application that the first terminal device is accessing/wants to access, or the AF may detect, by itself, an identifier of an application that the first terminal device is currently accessing. After the AF receives the identifier of the application from the SMF, or after detects the identifier of the application that the first terminal device is currently accessing, the AF may determine the first DN based on the DN identification information, the identifier of the DN that has been accessed and/or has not been accessed by the first terminal device, and the identifier of the application.

Specifically, the AF may determine the first DN based on the DN identification information, the identifier of the DN that has been accessed and/or has not been accessed by the first terminal device, the identifier of the application, and an identifier of an application server corresponding to the identifier in the DN identification information. For example, if the SMF sends identifiers of the K DNs to the AF, the AF may determine, based on identifiers of application servers corresponding to the DNs, application servers corresponding to identifiers of applications deployed in the M DNs in the K DNs, and the AF may select the first DN from the M DNs. In addition, the AF may determine the M DNs in the K DNs based on the received identifiers of the DNs that have been accessed and/or have not been accessed by the first terminal device, application servers corresponding to identifiers of applications are deployed in N DNs in the M DNs, and the AF may select the first DN from the N DNs. It can be learned that selection may be first performed based on the identifier of the application and the identifier of the application server, and then selection is performed based on the identifier of the DN that has been accessed and/or has not been accessed by the first terminal device; or selection may be first performed based on the identifier of the DN that has been accessed and/or has not been accessed by the first terminal device, and then selection is performed based on the identifier of the application and the identifier of the application server. Alternatively, there may be another selection manner. A sequence of determining the first DN based on the foregoing pieces of information may not be limited. The identifier of the application server corresponding to the identifier in the DN identification information may be configured in the SMF. In this case, the SMF further needs to send the identifier of the application server corresponding to the identifier in the DN identification information to the AF. The SMF may actively send the identifier of the application server corresponding to the identifier in the DN identification information to the AF; or the AF may first send a request to the SMF, and the SMF first sends, based on the request, the identifier of the application server corresponding to the identifier in the DN identification information to the AF. The identifier of the application server corresponding to the identifier in the DN identification information may alternatively be configured in the AF.

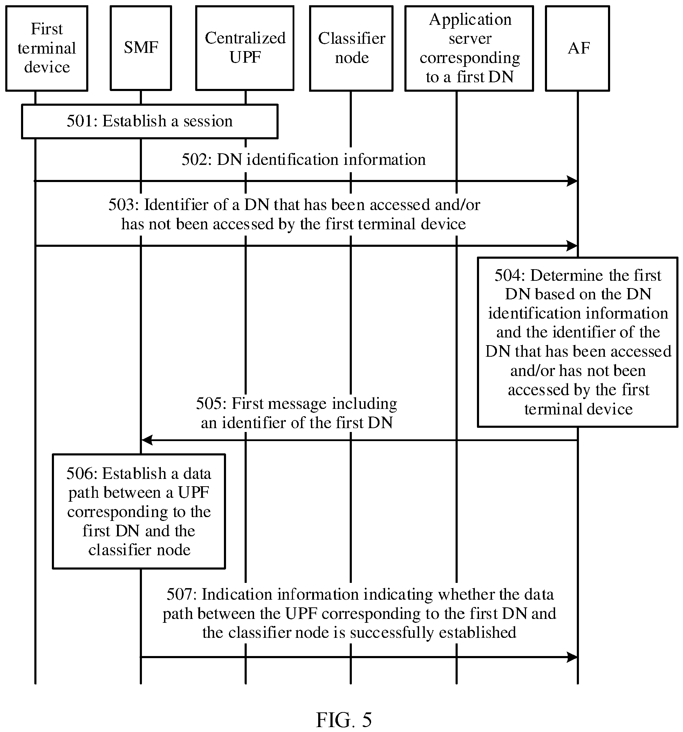

Based on the foregoing network architecture, FIG. 5 is a schematic flowchart of another communication method according to an embodiment of the present invention. A function performed by a device or a network element in the present invention may alternatively be performed by a module (for example, a chip) in the device or the network element. As shown in FIG. 5, the communication method may include the following steps.

501: A first terminal device establishes a session.

A process in which the first terminal device establishes the session may specifically include: The first terminal device may send a session establishment request to an AMF, the AMF may select, based on the session establishment request, an SMF to serve the session, and the SMF may select one or more UPFs to serve the session, and establish a user plane path of the session. The user plane path may include a path between an access network device serving the first terminal device and a UPF.

502: The SMF sends DN identification information to an AF.

Optionally, the SMF may send an identifier of an application to the AF. The application may be an application that the first terminal device is accessing/wants to access. The DN identification information and the identifier of the application may be included in one message and sent to the AF, or may be separately sent.

503: The SMF sends, to the AF, an identifier of a DN that has been accessed and/or has not been accessed by the first terminal device.

In another implementation, the SMF may send a message to the AF. The message may include the identifier sent by the SMF to the AF in step 502 and the identifier sent by the SMF to the AF in step 503.

504: The AF determines a first DN based on the DN identification information and the identifier of the DN that has been accessed and/or has not been accessed by the first terminal device.

Optionally, the AF may determine the application that the first terminal device is accessing/wants to access. A determining manner includes but is not limited to the following manners: The SMF may send, to the AF, the application that the first terminal device is accessing/wants to access, or the AF may detect, by itself, the application that the first terminal device is accessing/wants to access.

Optionally, the AF may first determine, based on the identifier of the application server corresponding to the DN, which DNs corresponding to identifiers in the DN identification information include the application that the first terminal device is accessing/wants to access. The identifier of the application server corresponding to the DN may be stored in a data table, a key-value pair, a context, or another form. A storage form is not limited. For example, the identifier of the application server corresponding to the DN may be shown in Table 3 or Table 4.

**Table 3**

| Identifier of a DN | Identifier of an application server |
|---|---|
| DN 1 | Application server 2, ..., application server X |
| DN 2 | Application server 1, application server 3, ..., application server Y |
| ... | ... |
| DN K | Application server 3, ..., application server Z |

**Table 4**

| Identifier of an application server | Identifier of a DN |
|---|---|
| Application server 1 | DN 1, ..., DN X |
| Application server 2 | DN 2, ..., DN Y |
| ... | ... |
| Application server K | DN 1, ..., DN Z |

The identifier of the application server corresponding to the DN may be configured on the AF, or may be sent by the SMF to the AF. The SMF may send identifiers of application servers corresponding to all configured DNs to the AF, or may send only identifiers of application servers corresponding to identifiers in the DN identification information to the AF. For example, M DNs and identifiers of corresponding application servers are configured on the SMF, the DN identification information includes identifiers of N DNs, and the SMF may send identifiers of application servers corresponding to the M DNs or the N DNs to the AF. N herein is an integer less than or equal to M.

Further, the AF may determine, with reference to the identifier of the DN that has been accessed and/or has not been accessed by the first terminal device, the first DN in the foregoing determined DNs that include the application that the first terminal device is accessing/wants to access.

Optionally, the AF may first select, from the DN identification information, an identifier of a DN that has been accessed by the first terminal device. If the DN includes the application that the first terminal device is accessing/wants to access, the AF determines that the DN is the first DN.

Optionally, the AF may determine the first DN based on one or more of factors such as the DN identification information, the identifier of the DN that has been accessed and/or has not been accessed by the first terminal device, the identifier of the application server corresponding to the DN, and the application that the first terminal device is accessing/wants to access, and the first terminal device has not accessed the first DN.

505: When the first terminal device has not accessed the first DN, the AF sends a first message to the SMF.

Optionally, the AF may send an identifier of the first DN to the SMF. The identifier of the first DN may be included in the first message, or may be sent separately from the first message.

In an implementation, the identifier of the first DN may be a DNAI.

In another implementation, the AF may determine one application server included in the first DN, and the identifier of the first DN may be an address of the application server.

506: The SMF establishes a data path between a UPF corresponding to the first DN and a classifier node.

507: The SMF sends, to the AF, indication information used to indicate whether the data path between the UPF corresponding to the first DN and the classifier node is successfully established.

For detailed descriptions of step 501 to step 507, refer to the foregoing related descriptions. Details are not described herein again.

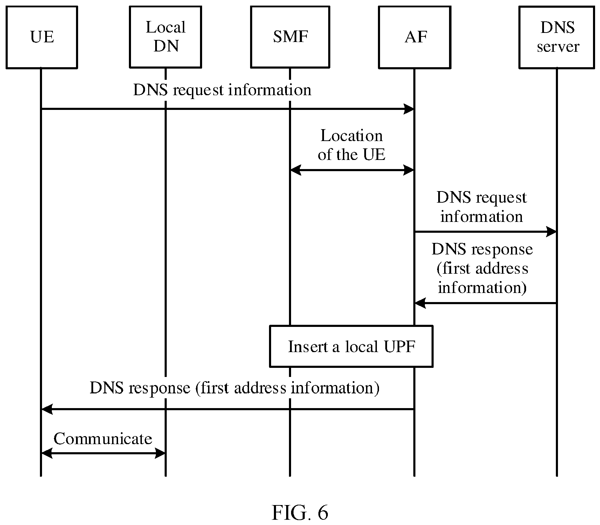

For better understanding embodiments of the present invention, the following first describes an application scenario of embodiments of the present invention. FIG. 6 is a schematic diagram of establishing communication between UE and a local DN according to an embodiment of the present invention. As shown in FIG. 6, the UE may send DNS request information to an AF network element, where the DNS request information may carry or include an identifier of an application. After receiving the DNS request information from the UE, the AF may obtain a current location of the UE from an SMF. Then, the AF may determine address information of the UE. The address information of the UE may be subnet information corresponding to a data network that supports serving the UE at the current location. Then, the AF may send the DNS request information and the address information of the UE to a DNS server. After receiving the address information of the UE and the DNS request information that are from the AF, the DNS server may determine address information of an application server corresponding to the identifier of the application, and send the address information of the application server corresponding to the identifier of the application to the AF. The address information of the application server corresponding to the identifier of the application includes first address information. Optionally, the DNS server may determine the first address information in the address information of the application server corresponding to the identifier of the application, and send the first address information to the AF. In this way, the AF does not need to determine the first address information. After receiving, from the DNS server, the address information of the application server corresponding to the identifier of the application, the AF may determine the first address information in the address information of the application server corresponding to the identifier of the application, and may send, to the SMF, a message including the first address information. After receiving the message, the SMF may establish a user plane path between a UPF (namely, a local UPF) corresponding to the local DN corresponding to the first address information and a classifier node. In addition, the AF may further send the first address information to the UE. After receiving the first address information from the AF, the UE may communicate with the local DN corresponding to the first address information.

In the foregoing process, after receiving a DNS response from the DNS server, the AF needs to send a message to the SMF regardless of whether the user plane path needs to be re-established. However, when the user plane path has been established, the AF does not need to send the message to the SMF. This causes a waste of resources. In addition, because a correspondence between location information of the UE and a DN and a correspondence between the DN and an application server deployed in the DN are configured on both the SMF and the AF, redundant deployment is caused.

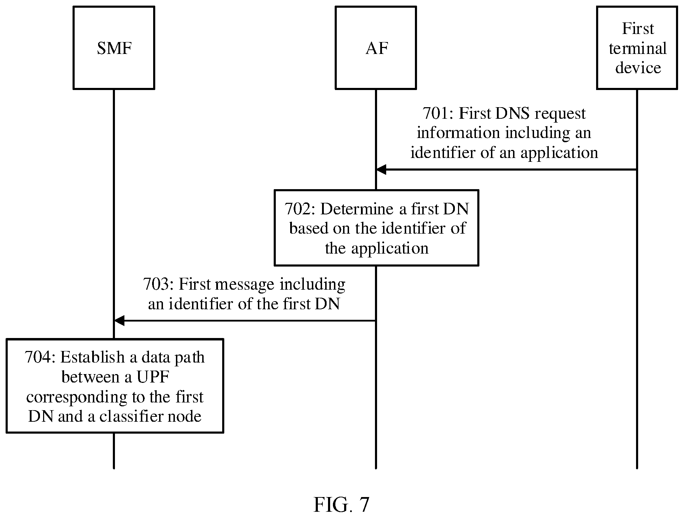

Based on the foregoing network architecture, FIG. 7 is a schematic flowchart of still another communication method according to an embodiment of the present invention. A function performed by a terminal device in the present invention may alternatively be performed by a module (for example, a chip) in the terminal device, a function performed by an AF in the present invention may alternatively be performed by a module (for example, a chip) in the AF, a function performed by an SMF in the present invention may alternatively be performed by a module (for example, a chip) in the SMF, and a function performed by a DNS server in the present invention may alternatively be performed by a module (for example, a chip) in the DNS server. As shown in FIG. 7, the communication method may include the following steps.

701: A first terminal device sends, to the AF, first DNS request information including an identifier of an application.

Correspondingly, the AF may receive, from the first terminal device, the first DNS request information including the identifier of the application.

When the first terminal device has a service requirement, the first terminal device may send, to the AF, the first DNS request information including the identifier of the application. The identifier of the application may be a fully qualified domain name (fully qualified domain name, FQDN), or may be an ID of the application, or may be other information that can uniquely identify the application.

Before, after, or when the AF receives, from the first terminal device, the first DNS request information including the identifier of the application, the AF may further receive an identifier of a DN in a DN set from the SMF. The DN set is a set of DNs that support serving the first terminal device at a current location. For detailed descriptions, refer to the descriptions in step 401. Details are not described herein again.

Before, after, or when the AF receives, from the first terminal device, the first DNS request information including the identifier of the application, the AF may further receive, from the SMF, an identifier of a DN that has been accessed and/or has not been accessed by the first terminal device. For detailed descriptions, refer to the descriptions in step 401. Details are not described herein again.

Before, after, or when the AF receives, from the first terminal device, the first DNS request information including the identifier of the application, the AF may further receive, from the SMF, an identifier of an application server corresponding to the DN. For detailed descriptions, refer to the descriptions in step 504. Details are not described herein again.

The AF may send request information to the SMF. Correspondingly, the SMF receives the request information from the AF, and then the SMF may send one or more of the foregoing information to the AF, including but not limited to the identifier of the DN in the DN set, the identifier of the DN that has been accessed and/or has not been accessed by the first terminal device, and the identifier of the application server corresponding to the DN.

The AF may send second request information to the SMF, where the second request information includes the identifier of the application and an identifier of the first terminal device. Correspondingly, the SMF receives the second request information from the AF, and then the SMF may select a first DN from the DN set based on the identifier of the first terminal device, the identifier of the application, and the identifier of the DN in the DN set, and send an identifier of the first DN to the AF. In an implementation, the SMF may first determine the current location of the first terminal device based on the identifier of the first terminal device, then determine the DN set based on the current location of the first terminal device, and then select the first DN from the DN set based on the identifier of the application, the identifier of the DN in the DN set, and the identifier of the application server corresponding to the DN. For a selection manner, refer to the foregoing descriptions. Details are not described herein again.

702: The AF determines the first DN based on the identifier of the application.

After receiving, from the first terminal device, the first DNS request information including the identifier of the application, the AF may determine the first DN based on the identifier of the application. The first DN includes an application server corresponding to the identifier of the application. That is, the application server corresponding to the identifier of the application is deployed in the first DN.

Before the AF determines the first DN based on the identifier of the application, the AF may send the request information to the SMF, to request the information described in step 701, including the identifier of the DN in the DN set, the identifier of the DN that has been accessed and/or has not been accessed by the first terminal device, and the identifier of the application server corresponding to the DN. The AF may determine the first DN based on these pieces of information received from the SMF and the identifier of the application. For a specific determining manner, refer to descriptions in step 402, step 403, and step 504. Details are not described herein again.

The AF may receive the identifier of the first DN from the SMF. The first DN may be determined by the SMF based on a request of the AF.

The AF may obtain, from a DNS server, address information of the application server corresponding to the identifier of the application; and determine the first DN for the first terminal device based on the obtained address information, where the obtained address information includes address information of the application server corresponding to the identifier of the application included in the first DN.

The AF may send the first DNS request information and address information of the first terminal device to the DNS server. After receiving the first DNS request information and the address information of the first terminal device that are from the AF, the DNS server may determine, based on the first DNS request information and the address information of the first terminal device, the address information of the application server corresponding to the identifier of the application, and then may send the address information of the application server corresponding to the identifier of the application to the AF. The AF may receive, from the DNS server, the address information of the application server corresponding to the identifier of the application. The address information of the first terminal device may be address information corresponding to a data network in a data network set. For example, one DNAI corresponds to one piece of subnet information. The DNS server herein is a centralized DNS server, also referred to as a central DSN server, and is a DNS server to which the first terminal device establishes a connection in a session establishment process. When a quantity of pieces of address information of the first terminal device is greater than 1, the AF may include the address information of the first terminal device in the first DNS request information at a time and send the first DNS request information to the DNS server, or the AF may send a plurality of pieces of first DNS request information to the DSN server. Each piece of first DNS request information may carry one piece of address information in the address information of the first terminal device. The address information of the first terminal device may be an identifier of a DN that supports serving the first terminal device at the current location within a service scope, or may be an IP address of a DN that supports serving the first terminal device at the current location within a service scope, or may be subnet information of a DN that supports serving the first terminal device at the current location within a service scope. The IP address of the DN or the subnet information of the DN may be obtained by converting the identifier of the DN. The DNS server may return, for one piece of address information in the address information of the first terminal device, the address information of the application server corresponding to the identifier of the application, or may not return the address information of the application server corresponding to the identifier of the application.

The SMF may send the address information of the first terminal device to the AF. The address information of the first terminal device may be actively sent by the SMF, or may be sent by the SMF after the SMF receives third request information from the AF. The third request information may include the identifier of the first terminal device. Before sending the address information of the first terminal device to the AF, the SMF may further determine the address information of the first terminal device based on an identifier of a DN corresponding to a location of the terminal device. It can be learned that the address information of the first terminal device may be actively sent by the SMF to the AF, or may be sent by the SMF to the AF when the AF sends a request to the SMF.

The SMF may alternatively send the identifier of the DN in the DN set to the AF. The AF may determine the address information of the first terminal device based on the identifier of the DN in the DN set. It can be learned that the address information of the first terminal device may alternatively be determined by the AF based on the information sent by the SMF.

Alternatively, the AF may send the first DNS request information to the DNS server corresponding to the address information of the first terminal device, that is, separately send the first DNS request information to a local DSN server corresponding to each piece of address information in the address information of the first terminal device. The address information of the first terminal device may be subnet information corresponding to the DN. The DNS server corresponding to the address information of the first terminal device may be understood as a DNS server corresponding to the DN, for example, a local DNS server that performs DNS resolution for a local DN. After receiving the first DNS request inform from the AF, the DNS server corresponding to the address information of the first terminal device may determine the address information of the application server corresponding to the identifier of the application, and then send the address information of the application server corresponding to the identifier of the application to the AF. The AF receives the address information of the application server corresponding to the identifier of the application of the DNS server corresponding to the address information of the first terminal device. For a DSN server corresponding to one piece of address information in the address information of the first terminal device, the address information of the application server corresponding to the identifier of the application may be returned, or the address information of the application server corresponding to the identifier of the application may not be returned. A reason that the address information may not be returned may be that the application server corresponding to the identifier of the application may be deployed, or load of the application server corresponding to the identifier of the application may be heavy, or there may be another reason. This is not limited herein.

After obtaining, from the DNS server, the address information of the application server corresponding to the identifier of the application, when a quantity of pieces of the obtained address information is 1, the AF may determine the address information as the address information of the application server corresponding to the identifier of the application included in the first DN. When a quantity of pieces of the obtained address information is greater than 1, the first DN may be determined for the first terminal device based on the obtained address information and one or more of the DN that the first terminal device currently accesses, a priority of the application server or the DN, a delay of the application server or the DN, and a load status of the application server or the DN. To reduce a quantity of established data paths, the first DN may be preferentially selected from DNs that the first terminal device currently accesses.

When there are a plurality of DNs that can be used by the first terminal device for access, the first DN may be preferentially selected from DNs that have been accessed by the first terminal device. In this way, step 703 and step 704 may not need to be performed, thereby reducing a quantity of processing steps.

703: When the first terminal device has not accessed the first DN, the AF sends a first message to the SMF.

After the AF determines the first DN based on the identifier of the application, if the first terminal device has not accessed the first DN, the AF may send the first message to the SMF. When the first terminal device has accessed the first DN, the AF may not send the first message to the SMF.

Correspondingly, the SMF receives the first message from the AF.

704: The SMF establishes a data path between a UPF corresponding to the first DN and a classifier node.

After receiving the first message from the AF, the SMF may reconfigure a user plane path or a data path for a session of the first terminal device, and may establish the data path between the UPF corresponding to the first DN and the classifier node. The first message may carry or include the identifier of the first DN. For details, refer to step 403 or step 506. Details are not described herein again. The user plane path in this embodiment of the present invention is the data path.

After establishing the data path between the UPF corresponding to the first DN and the classifier node, if the data path between the UPF corresponding to the first DN and the classifier node is successfully established, the SMF may send, to the AF, a message indicating that the data path between the UPF corresponding to the first DN and the classifier node is successfully established. After receiving the message, the AF may send, to the first terminal device, the address information of the application server corresponding to the identifier of the application included in the first DN. After receiving the address information, the first terminal device may communicate with the application server corresponding to the address information. In one case, the AF may first send, to the SMF or a PCF, the address information of the application server corresponding to the identifier of the application included in the first DN, and then the SMF or the PCF may send, to the first terminal device by using a NAS message, the address information of the application server corresponding to the identifier of the application included in the first DN; or the user plane path may be the SMF-the UPF-the first terminal device, or the like. In another case, the AF may send, to the first terminal device through the user plane path, the address information of the application server corresponding to the identifier of the application included in the first DN. The user plane path may be the AF-the inserted UPF-the first terminal device.

Optionally, if establishment of the data path between the UPF corresponding to the first DN and the classifier node fails, the SMF may send, to the AF, a message indicating that establishment of the data path between the UPF corresponding to the first DN and the classifier node fails.

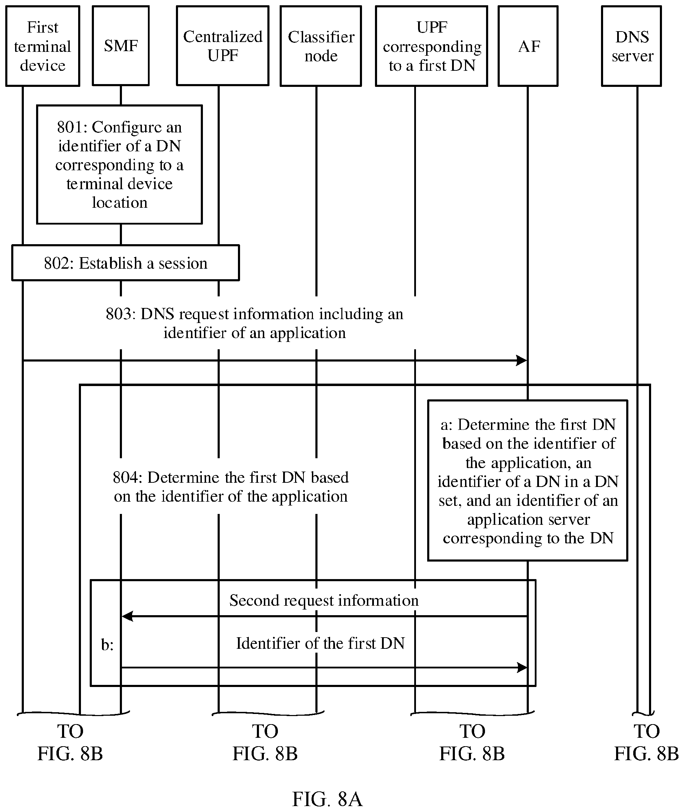

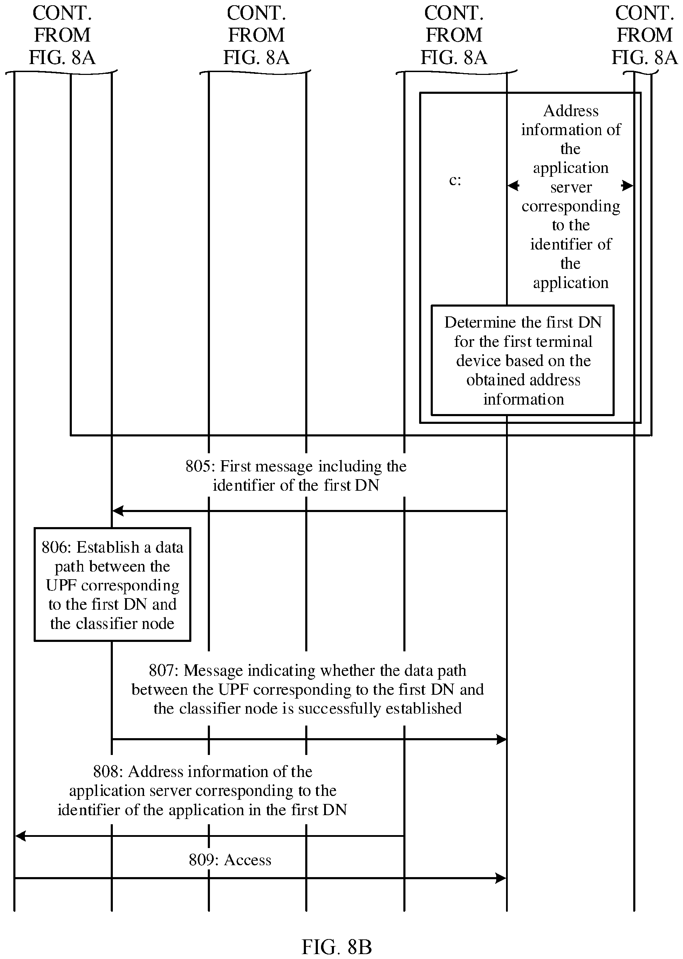

Based on the foregoing network architecture, FIG. 8A and FIG. 8B are a schematic flowchart of still another communication method according to an embodiment of the present invention. As shown in FIG. 8A and FIG. 8B, the communication method may include the following steps.

801: An SMF configures an identifier of a DN corresponding to a terminal device location.

In one case, the SMF may further configure an identifier of an application server corresponding to the DN. In another case, an identifier of an application server corresponding to the DN may be configured in an AF. In addition, the SMF may further configure subnet information corresponding to the identifier of the DN.

In addition, the SMF may determine network segment information of multi-access edge computing (multi-access edge computing, MEC) or network segment information of the DN based on an identifier of a network segment corresponding to the DN. The SMF may be configured with the identifier of the network segment corresponding to the DN. The identifier of the network segment corresponding to the DN may alternatively be configured on the AF, and is sent by the AF to the SMF.

The AF may be an MEC platform, or may be an edge application server (edge application server, EAS), or may be an edge enabler server (edge enabler server, EES), or may be an edge configuration server (edge configuration server, ECS), or may be another device, platform, or server having an equivalent function, for example, a DNS AF.

802: A first terminal device establishes a session.

803: The first terminal device sends, to the AF, first DNS request information including an identifier of an application.

Correspondingly, the AF receives, from the first terminal device, the first DNS request information including the identifier of the application.

804: The AF determines a first DN based on the identifier of the application.

Step 804 may include: a: The AF determines the first DN based on the identifier of the application, an identifier of a DN in a DN set, and an identifier of an application server corresponding to the DN. This step may further include: The AF sends first request information to the SMF, as described in step 701. Details are not described herein again.

Step 804 may also include: b: The AF sends, to the SMF, second request information including the identifier of the application and an identifier of the first terminal device, the SMF determines the first DN based on the identifier of the first terminal device, the identifier of the application, the identifier of the DN corresponding to the terminal device location, and the identifier of the application server corresponding to the DN, and the SMF sends an identifier of the first DN to the AF.

Step 804 may also include: c: The AF obtains, from a DNS server, address information of an application server corresponding to the identifier of the application, and determines the first DN for the first terminal device based on the obtained address information.

a, b, and c are three parallel technical solutions.

805: When the first terminal device has not accessed the first DN, the AF sends, to the SMF, a first message including the identifier of the first DN.

806: The SMF establishes a data path between a UPF corresponding to the first DN and a classifier node.

807: The SMF sends, to the AF, a message indicating whether the data path between the UPF corresponding to the first DN and the classifier node is successfully established.

808: The AF sends, to the first terminal device, the address information of the application server corresponding to the identifier of the application included in the first DN.

809: The first terminal device accesses, through the UPF corresponding to the first DN, the application server corresponding to the identifier of the application included in the first DN.

For detailed descriptions of step 801 to step 809, refer to the foregoing related descriptions. Details are not described herein again.

Mutual reference may be made between the foregoing several embodiments, mutual reference may be made between descriptions of related information in different embodiments, and descriptions of related information in different locations are not limited thereto, and are also applicable to corresponding content in other locations.

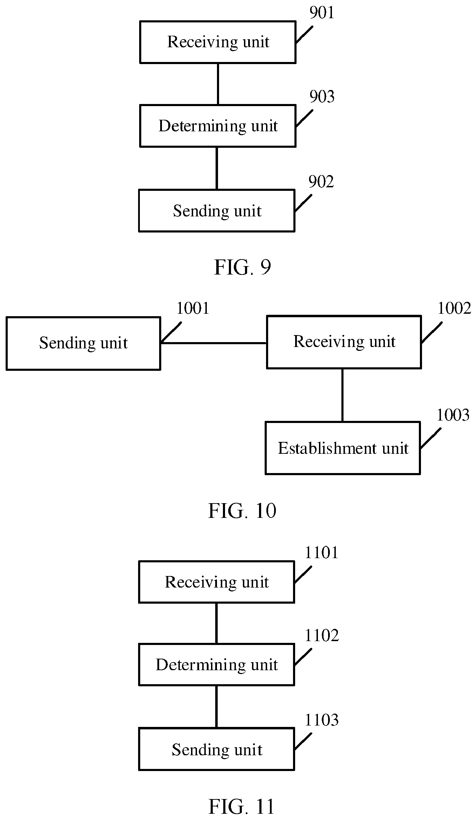

Based on the foregoing network architecture, FIG. 9 is a schematic diagram of a structure of a communication apparatus according to an embodiment of the present invention. As shown in FIG. 9, the communication apparatus may include:
a receiving unit 901, configured to receive DN identification information from an SMF, where the DN set identification information includes an identifier of at least one DN that supports serving a first terminal device at a current location; and
a sending unit 902, configured to send a first message to the SMF when the first terminal device has not accessed a first DN, where the first message includes an identifier of the first DN, the identifier of the at least one DN that supports serving the first terminal device at the current location includes the identifier of the first DN, and the first message is used to establish a data path between a UPF corresponding to the first DN and a classifier node.

In an embodiment, the receiving unit 901 is further configured to receive indication information from the SMF, where the indication information is used to indicate whether the data path is successfully established.

In an embodiment, the receiving unit 901 is further configured to receive, from the SMF, an identifier of a DN that has been accessed and/or has not been accessed by the first terminal device.

In an embodiment, the communication apparatus may further include:
a determining unit 903, configured to determine the first DN based on the DN identification information and the identifier of the DN that has been accessed and/or has not been accessed by the first terminal device.

In an embodiment, the receiving unit 901 is further configured to receive an identifier of an application from the SMF; and
the determining unit 903 is specifically configured to determine the first DN based on the DN identification information, the identifier of the DN that has been accessed and/or has not been accessed by the first terminal device, and the identifier of the application.

For more detailed descriptions of the receiving unit 901, the sending unit 902, and the determining unit 903, directly refer to related descriptions of the AF in the method embodiments shown in FIG. 4 and FIG. 5. Details are not described herein again.

Based on the foregoing network architecture, FIG. 10 is a schematic diagram of a structure of another communication apparatus according to an embodiment of the present invention. As shown in FIG. 10, the communication apparatus may include:
a sending unit 1001, configured to send DN identification information to an AF, where the DN set identification information includes an identifier of at least one DN that supports serving a first terminal device at a current location;
a receiving unit 1002, configured to receive a first message sent by the AF when the first terminal device has not accessed a first DN, where the first message includes an identifier of the first DN, and the identifier of the at least one DN that supports serving the first terminal device at the current location includes the identifier of the first DN; and
an establishment unit 1003, configured to establish a data path between a UPF corresponding to the first DN and a classifier node.

In an embodiment, the sending unit 1001 is further configured to send indication information to the AF, where the indication information is used to indicate whether the data path is successfully established.

In an embodiment, the sending unit 1001 is further configured to send, to the AF, an identifier of a DN that has been accessed and/or has not been accessed by the first terminal device.

In an embodiment, the DN identification information and the identifier of the DN that has been accessed and/or has not been accessed by the first terminal device are used by the AF to determine the first DN.

In an embodiment, the sending unit 1001 is further configured to send an identifier of an application to the AF; and
that the DN identification information and the identifier of the DN that has been accessed and/or has not been accessed by the first terminal device are used by the AF to determine the first DN includes:
the DN identification information, the identifier of the DN that has been accessed and/or has not been accessed by the first terminal device, and the identifier of the application are used by the AF to determine the first DN.

For more detailed descriptions of the sending unit 1001, the receiving unit 1002, and the establishment unit 1003, directly refer to related descriptions of the SMF in the method embodiments shown in FIG. 4 and FIG. 5. Details are not described herein again.

Based on the foregoing network architecture, FIG. 11 is a schematic diagram of a structure of still another communication apparatus according to an embodiment of the present invention. As shown in FIG. 11, the communication apparatus may include:
a receiving unit 1101, configured to receive first domain name system DNS request information from a first terminal device, where the first DNS request information includes an identifier of an application;
a determining unit 1102, configured to determine a first DN based on the identifier of the application, where the first DN includes an application server corresponding to the identifier of the application; and
a sending unit 1103, configured to send a first message to an SMF when the first terminal device has not accessed the first DN, where the first message includes an identifier of the first DN, and the first message is used to establish a data path between a UPF corresponding to the first DN and a classifier node.

In an embodiment, the receiving unit 1101 is further configured to receive an identifier of a DN in a DN set from the SMF, where the DN set is a set of DNs that support serving the first terminal device at a current location; and
the determining unit 1102 is specifically configured to determine the first DN based on the identifier of the application and the identifier of the DN in the DN set.

In an embodiment, the sending unit 1103 is further configured to: before the receiving unit 1101 receives the identifier of the DN in the DN set from the SMF, send first request information to the SMF, where the first request information includes an identifier of the first terminal device, and the first request information is used by the SMF to determine the DN set based on the identifier of the DN corresponding to the location of the terminal device.

In an embodiment, that the determining unit 1102 determines the first DN based on the identifier of the application and the identifier of the DN in the DN set includes:
selecting the first DN from the DN set based on the identifier of the application, the identifier of the DN in the DN set, and an identifier of the application server corresponding to the DN in the DN set.

In an embodiment, the receiving unit 1101 is further configured to receive, from the SMF, the identifier of the application server corresponding to the DN in the DN set.

In an embodiment, the determining unit 1102 is specifically configured to:
send second request information to the SMF, where the second request information includes the identifier of the application and an identifier of the first terminal device, and the second request information is used by the SMF to determine the first DN based on an identifier of a DN corresponding to a location of the terminal device and an identifier of the application server corresponding to the DN; and
receive the identifier of the first DN from the SMF.

In an embodiment, the determining unit 1102 is specifically configured to:
obtain, from a DNS server, address information of the application server corresponding to the identifier of the application; and
determine a first DN for the first terminal device based on the obtained address information, where address information of the application server corresponding to the identifier of the application included in the first DN is included in the obtained address information.

In an embodiment, that the determining unit 1102 obtains, from a DNS server, address information of the application server corresponding to the identifier of the application includes:
sending the first DNS request information and address information of the first terminal device to the DNS server; and
receiving, from the DNS server, the address information of the application server corresponding to the identifier of the application.

In an embodiment, that the determining unit 1102 obtains, from a DNS server, address information of the application server corresponding to the identifier of the application includes:
sending the first DNS request information to the DNS server corresponding to address information of the first terminal device; and
receiving, from the DNS server corresponding to the address information of the first terminal device, the address information of the application server corresponding to the identifier of the application.

In an embodiment, that the determining unit 1102 determines the first DN for the first terminal device based on the obtained address information includes:
when a quantity of pieces of the obtained address information is greater than 1, determining the first DN for the first terminal device based on the obtained address information and one or more of the DN that the first terminal device currently accesses, a priority of the application server or the DN, a delay of the application server or the DN, and a load status of the application server or the DN.

In an embodiment, the receiving unit 1101 is further configured to receive the address information of the first terminal device from the SMF.

In an embodiment, the sending unit 1103 is further configured to: before the receiving unit 1101 receives the address information of the first terminal device from the SMF, send third request information to the SMF, where the third request information includes an identifier of the first terminal device, and the third request information is used by the SMF to determine the address information of the first terminal device based on an identifier of a DN corresponding to a location of the terminal device.

In an embodiment, the receiving unit 1101 is further configured to receive an identifier of a DN in a DN set from the SMF; and
the determining unit 1102 is further configured to determine the address information of the first terminal device based on the identifier of the DN in the DN set, where the DN set is a set of DNs that support serving the first terminal device at a current location.

In an embodiment, the sending unit 1103 is further configured to send, to the first terminal device, the address information of the application server corresponding to the identifier of the application included in the first DN.

For more detailed descriptions of the receiving unit 1101, the determining unit 1102, and the sending unit 1103, directly refer to related descriptions of the AF in the method embodiments shown in FIG. 7 and FIG. 8A and FIG. 8B. Details are not described herein again.

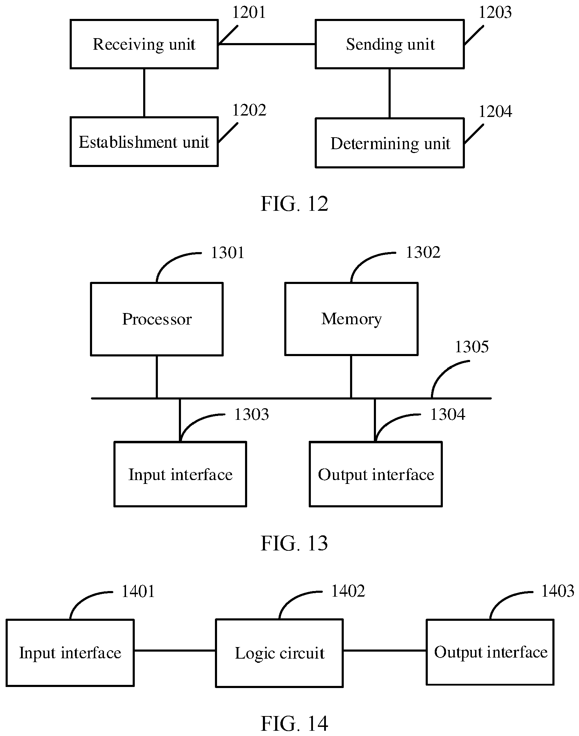

Based on the foregoing network architecture, FIG. 12 is a schematic diagram of a structure of still another communication apparatus according to an embodiment of the present invention. As shown in FIG. 12, the communication apparatus may include:
a receiving unit 1201, configured to receive a first message sent by an AF when a first terminal device has not accessed a first DN, where the first message includes an identifier of the first DN, the first DN includes an application server corresponding to an identifier of an application, the identifier of the application is an identifier, of an application, included in first DNS request information, and the first DNS request information is from the first terminal device; and
an establishment unit 1202, configured to establish a data path between a UPF corresponding to the first DN and a classifier node.

In an embodiment, the communication apparatus may further include:
a sending unit 1203, configured to send an identifier of a DN in a DN set to the AF, where the DN set is a set of DNs that support serving the first terminal device at a current location; and
the identifier of the DN in the DN set is used by the AF to determine the first DN.

In an embodiment, the receiving unit 1201 is further configured to: before the sending unit 1203 sends the identifier of the DN in the DN set to the AF, receive first request information from the AF, where the first request information includes an identifier of the first terminal device; and
the communication apparatus may further include:
a determining unit 1204, configured to determine the DN set based on the identifier of the first terminal device and the identifier of the DN corresponding to the location of the terminal device.

In an embodiment, the sending unit 1203 is further configured to send, to the AF, an identifier of the application server corresponding to the DN in the DN set; and
that the identifier of the DN in the DN set is used by the AF to determine the first DN includes:
the identifier of the DN in the DN set and the identifier of the application server corresponding to the DN in the DN set are used by the AF to determine the first DN.

In an embodiment, the receiving unit 1201 is further configured to receive second request information from the AF, where the second request information includes the identifier of the application and an identifier of the first terminal device;
the determining unit 1204 is further configured to determine the first DN based on the identifier of the first terminal device, the identifier of the application, an identifier of a DN corresponding to a location of the terminal device, and an identifier of an application server corresponding to the DN; and
the sending unit 1203 is further configured to send the identifier of the first DN to the AF.

In an embodiment, the determining unit 1204 is further configured to determine address information of the first terminal device based on an identifier of a DN corresponding to a location of the terminal device; and
the sending unit 1203 is further configured to: send the address information of the first terminal device to the AF, where the address information of the first terminal device is used by the AF to obtain, from a DNS server, address information of the application server corresponding to the identifier of the application; and determine the first DN for the first terminal device based on the obtained address information.

In an embodiment, the receiving unit 1201 is further configured to receive third request information from the AF, where the third request information carries an identifier of the first terminal device; and
that the determining unit 1204 determines address information of the first terminal device based on an identifier of a DN corresponding to a location of the terminal device includes:
determining the address information of the first terminal device based on the identifier of the first terminal device and the identifier of the DN corresponding to the location of the terminal device.

In an embodiment, that the AF obtains, from a DNS server, address information of the application server corresponding to the identifier of the application includes:
The AF sends the first DNS request information and address information of the first terminal device to the DNS server; and receives, from the DNS server, the address information of the application server corresponding to the identifier of the application.

In an embodiment, that the AF obtains, from a DNS server, address information of the application server corresponding to the identifier of the application includes:
The AF sends the first DNS request information to the DNS server corresponding to address information of the first terminal device; and receives, from the DNS server corresponding to the address information of the first terminal device, the address information of the application server corresponding to the identifier of the application.

In an embodiment, that the AF determines the first DN for the first terminal device based on the obtained address information includes:
When a quantity of pieces of the obtained address information is greater than 1, the AF determines the first DN for the first terminal device based on the obtained address information and one or more of the DN that the first terminal device currently accesses, a priority of the application server or the DN, a delay of the application server or the DN, and a load status of the application server or the DN.

In an embodiment, the sending unit 1203 is further configured to send a DN in a DN set to the AF, where the DN in the DN set is used by the AF to determine the address information of the first terminal device, and the DN set is a set of DNs that support serving the first terminal device within a service scope.

For more detailed descriptions of the receiving unit 1201, the establishment unit 1202, the sending unit 1203, and the determining unit 1204, directly refer to related descriptions of the SMF in the method embodiments shown in FIG. 7 and FIG. 8A and FIG. 8B. Details are not described herein again.

Based on the foregoing network architecture, FIG. 13 is a schematic diagram of a structure of still another communication apparatus according to an embodiment of the present invention. As shown in FIG. 13, the communication apparatus may include a processor 1301, a memory 1302, an input interface 1303, an output interface 1304, and a bus 1305. The memory 1302 may exist independently, and may be connected with the processor 1301 through the bus 1305. Alternatively, the memory 1302 may be integrated with the processor 1301. The bus 1305 is configured to implement connections between these components.

In an embodiment, the communication apparatus may be an SMF or a module (for example, a chip) in the SMF. When computer program instructions stored in the memory 1302 are executed, the processor 1301 is configured to control the sending unit 1001 and the receiving unit 1002 to perform the operations performed in the foregoing embodiment. The processor 1301 is further configured to perform the operations performed by the establishment unit 1003 in the foregoing embodiment. The input interface 1303 is configured to perform the operations performed by the receiving unit 1002 in the foregoing embodiment. The output interface 1304 is configured to perform the operations performed by the sending unit 1001 in the foregoing embodiment. The SMF or the module in the SMF may be further configured to perform various methods performed by the SMF in the method embodiments in FIG. 4 and FIG. 5. Details are not described again.

In an embodiment, the communication apparatus may be an AF or a module (for example, a chip) in the AF. When computer program instructions stored in the memory 1302 are executed, the processor 1301 is configured to control the receiving unit 1101 and the sending unit 1103 to perform the operations performed in the foregoing embodiment. The processor 1301 is further configured to perform the operations performed by the determining unit 1102 in the foregoing embodiment. The input interface 1303 is configured to perform the operations performed by the receiving unit 1101 in the foregoing embodiment. The output interface 1304 is configured to perform the operations performed by the sending unit 1103 in the foregoing embodiment. The AF or the module in the AF may be further configured to perform various methods performed by the AF in the method embodiments in FIG. 7 and FIG. 8A and FIG. 8B. Details are not described again.

In an embodiment, the communication apparatus may be an SMF or a module (for example, a chip) in the SMF. When computer program instructions stored in the memory 1302 are executed, the processor 1301 is configured to control the receiving unit 1201 and the sending unit 1203 to perform the operations performed in the foregoing embodiment. The processor 1301 is further configured to perform the operations performed by the establishment unit 1202 and the determining unit 1204 in the foregoing embodiment. The input interface 1303 is configured to perform the operations performed by the receiving unit 1201 in the foregoing embodiment. The output interface 1304 is configured to perform the operations performed by the sending unit 1203 in the foregoing embodiment. The SMF or the module in the SMF may be further configured to perform various methods performed by the SMF in the method embodiments in FIG. 7 and FIG. 8A and FIG. 8B. Details are not described again.

Based on the foregoing network architecture, FIG. 14 is a schematic diagram of a structure of still another communication apparatus according to an embodiment of the present invention. As shown in FIG. 14, the communication apparatus may include an input interface 1401, a logic circuit 1402, and an output interface 1403. The input interface 1401 is connected to the output interface 1403 through the logic circuit 1402. The input interface 1401 is configured to receive information from another communication apparatus, and the output interface 1403 is configured to output, schedule, or send information to the another communication apparatus. The logic circuit 1402 is configured to perform operations other than operations of the input interface 1401 and the output interface 1403, for example, implement functions implemented by the processor 1301 in the foregoing embodiment. The communication apparatus may be an AF or a module in the AF, or may be an SMF or a module in the SMF. For more detailed descriptions of the input interface 1401, the logic circuit 1402, and the output interface 1403, directly refer to related descriptions of the SMF or the AF in the foregoing method embodiments. Details are not described herein again.

## Claims

1. A communication method applied to an application function network element, comprising:
receiving (401) data network identification information from a session management function network element, wherein the data network identification information comprises an identifier of at least one data network that supports serving a first terminal device at a current location, and the at least one data network comprises a first data network; and
in response to determining, based on the data network identification information, that the first terminal device has not accessed the first data network, sending (402) a first message to the session management function network element, wherein the first message comprises an identifier of the first data network, and the first message is used to establish a data path between a user plane function network element corresponding to the first data network and a classifier node, wherein the classifier node distributes an uplink data packet from the first terminal to a user plane function network element corresponding to one of the at least one data network according to a distribution rule or sends a data packet from a user plane function network element corresponding to one of the at least one data network to the first terminal.

2. The method according to claim 1, wherein the method further comprises:
receiving indication information from the session management function network element, wherein the indication information is used to indicate whether the data path is successfully established.

3. The method according to claim 1 or 2, wherein the method further comprises:
receiving, from the session management function network element, an identifier of a data network that has been accessed and/or has not been accessed by the first terminal device.

4. The method according to claim 3, wherein the method further comprises:
determining the first data network based on the data network identification information and the identifier of the data network that has been accessed and/or has not been accessed by the first terminal device.

5. The method according to claim 4, wherein the method further comprises:
receiving an identifier of an application from the session management function network element; and
the determining the first data network based on the data network identification information and the identifier of the data network that has been accessed and/or has not been accessed by the first terminal device comprises:
determining the first data network based on the data network identification information, the identifier of the data network that has been accessed and/or has not been accessed by the first terminal device, and the identifier of the application.

6. A communication method applied to a session management function network element, comprising:
sending (401) data network identification information to an application function network element, wherein the data network identification information comprises an identifier of at least one data network that supports serving a first terminal device at a current location, and the at least one data network comprises a first data network;
receiving (402) a first message sent by the application function network element when it is determined that the first terminal device has not accessed the first data network, wherein the first message comprises an identifier of the first data network; and
establishing (403), based on the first message, a data path between a user plane function network element corresponding to the first data network and a classifier node, wherein the classifier node distributes an uplink data packet from the first terminal to a user plane function network element corresponding to one of the at least one data network according to a distribution rule or sends a data packet from a user plane function network element corresponding to one of the at least one data network to the first terminal.

7. The method according to claim 6, wherein the method further comprises:
sending indication information to the application function network element, wherein the indication information is used to indicate whether the data path is successfully established.

8. The method according to claim 6 or 7, wherein the method further comprises:
sending, to the application function network element, an identifier of a data network that has been accessed and/or has not been accessed by the first terminal device.

9. The method according to claim 8, wherein the data network identification information and the identifier of the data network that has been accessed and/or has not been accessed by the first terminal device are used by the application function network element to determine the first data network.

10. The method according to claim 9, wherein the method further comprises:
sending an identifier of an application to the application function network element; and
that the data network identification information and the identifier of the data network that has been accessed and/or has not been accessed by the first terminal device are used by the application function network element to determine the first data network comprises:
the data network identification information, the identifier of the data network that has been accessed and/or has not been accessed by the first terminal device, and the identifier of the application are used by the application function network element to determine the first data network.

11. A communication apparatus, comprising:
a receiving unit (1201), configured to receive data network identification information from a session management function network element, wherein the data network identification information comprises an identifier of at least one data network that supports serving a first terminal device at a current location, and the at least one data network comprises a first data network; and
a sending unit (1203), configured to in response to determining, based on the data network identification information, that the first terminal device has not accessed the first data network, send a first message to the session management function network element, wherein the first message comprises an identifier of the first data network, and the first message is used to establish a data path between a user plane function network element corresponding to the first data network and a classifier node, wherein the classifier node distributes an uplink data packet from the first terminal to a user plane function network element corresponding to one of the at least one data network according to a distribution rule or sends a data packet from a user plane function network element corresponding to one of the at least one data network to the first terminal.

12. The apparatus according to claim 11, wherein the receiving unit is further configured to receive indication information from the session management function network element, wherein the indication information is used to indicate whether the data path is successfully established.

13. The apparatus according to claim 11 or 12, wherein the receiving unit is further configured to receive, from the session management function network element, an identifier of a data network that has been accessed and/or has not been accessed by the first terminal device.

14. The apparatus according to claim 13, wherein the apparatus further comprises:
a determining unit, configured to determine the first data network based on the data network identification information and the identifier of the data network that has been accessed and/or has not been accessed by the first terminal device.

15. The apparatus according to claim 14, wherein the receiving unit is further configured to receive an identifier of an application from the session management function network element; and
the determining unit is specifically configured to determine the first data network based on the data network identification information, the identifier of the data network that has been accessed and/or has not been accessed by the first terminal device, and the identifier of the application.

## Patentansprüche

1. Auf ein Netzwerkelement der Anwendungsfunktion angewendetes Kommunikationsverfahren, umfassend:
Empfangen (401) von Identifikationsinformationen für Datennetzwerke von einem Netzwerkelement der Sitzungsverwaltungsfunktion, wobei die Identifikationsinformationen für Datennetzwerke eine Kennung von mindestens einem Datennetzwerk umfassen, welche das Bedienen einer ersten Endgerätevorrichtung an einem aktuellen Standort unterstützt, und das mindestens eine Datennetzwerk ein erstes Datennetzwerk umfasst; und
und als Reaktion auf das Bestimmen, basierend auf den Identifikationsinformationen für Datennetzwerke, dass die erste Endgerätevorrichtung nicht auf das erste Datennetzwerk zugegriffen hat, Senden (402) einer ersten Nachricht an das Netzwerkelement der Sitzungsverwaltungsfunktion, wobei die erste Nachricht eine Kennung des ersten Datennetzwerks umfasst und die erste Nachricht verwendet wird, um einen Datenpfad zwischen einem Netzwerkelement der Benutzerebenenfunktion entsprechend dem ersten Datennetzwerk und einem Klassifiziererknoten herzustellen, wobei der Klassifiziererknoten ein Uplink-Datenpaket von dem ersten Endgerät an ein Netzwerkelement der Benutzerebenenfunktion entsprechend einem des mindestens einen Datennetzwerks gemäß einer Verteilungsregel verteilt oder ein Datenpaket von einem Netzwerkelement der Benutzerebenenfunktion entsprechend einem des mindestens einen Datennetzwerks an das erste Endgerät sendet.

2. Verfahren nach Anspruch 1, wobei das Verfahren ferner Folgendes umfasst:
Empfangen von Anzeigeinformationen von dem Netzwerkelement der Sitzungsverwaltungsfunktion, wobei die Anzeigeinformationen verwendet werden, um anzuzeigen, ob der Datenpfad erfolgreich hergestellt wurde.

3. Verfahren nach Anspruch 1 oder 2, wobei das Verfahren ferner Folgendes umfasst:
Empfangen einer Kennung eines Datennetzwerks, auf welches die erste Endgerätevorrichtung zugegriffen hat und/oder auf welches sie nicht zugegriffen hat, von dem Netzwerkelement der Sitzungsverwaltungsfunktion.

4. Verfahren nach Anspruch 3, wobei das Verfahren ferner Folgendes umfasst:
Bestimmen des ersten Datennetzwerks basierend auf den Identifikationsinformationen für Datennetzwerke und der Kennung des Datennetzwerks, auf welches die erste Endgerätevorrichtung zugegriffen hat und/oder auf welches sie nicht zugegriffen hat.

5. Verfahren nach Anspruch 4, wobei das Verfahren ferner Folgendes umfasst:
Empfangen einer Kennung einer Anwendung von dem Netzwerkelement der Sitzungsverwaltungsfunktion; und
das Bestimmen des ersten Datennetzwerks basierend auf den Identifikationsinformationen für Datennetzwerke und der Kennung des Datennetzwerks, auf welches die erste Endgerätevorrichtung zugegriffen hat und/oder auf welches sie nicht zugegriffen hat, Folgendes umfasst:
Bestimmen des ersten Datennetzwerks basierend auf den Identifikationsinformationen für Datennetzwerke, der Kennung des Datennetzwerks, auf welches die erste Endgerätevorrichtung zugegriffen hat und/oder auf welches sie nicht zugegriffen hat, und der Kennung der Anwendung.

6. Auf ein Netzwerkelement der Sitzungsverwaltungsfunktion angewendetes Kommunikationsverfahren, umfassend:
Senden (401) von Identifikationsinformationen für Datennetzwerke an ein Netzwerkelement der Anwendungsfunktion, wobei die Identifikationsinformationen für Datennetzwerke eine Kennung von mindestens einem Datennetzwerk umfassen, welche das Bedienen einer ersten Endgerätevorrichtung an einem aktuellen Standort unterstützt, und das mindestens eine Datennetzwerk ein erstes Datennetzwerk umfasst;
Empfangen (402) einer ersten Nachricht, die durch das Netzwerkelement der Anwendungsfunktion gesendet wird, wenn bestimmt wird, dass die erste Endgerätevorrichtung nicht auf das erste Datennetzwerk zugegriffen hat, wobei die erste Nachricht eine Kennung des ersten Datennetzwerks umfasst; und
Herstellen (403), basierend auf der ersten Nachricht, eines Datenpfads zwischen einem Netzwerkelement der Benutzerebenenfunktion entsprechend dem ersten Datennetzwerk und einem Klassifiziererknoten, wobei der Klassifiziererknoten ein Uplink-Datenpaket von dem ersten Endgerät an ein Netzwerkelement der Benutzerebenenfunktion entsprechend einem des mindestens einen Datennetzwerks gemäß einer Verteilungsregel verteilt oder ein Datenpaket von einem Netzwerkelement der Benutzerebenenfunktion entsprechend einem des mindestens einen Datennetzwerks an das erste Endgerät sendet.

7. Verfahren nach Anspruch 6, wobei das Verfahren ferner Folgendes umfasst:
Senden von Anzeigeinformationen an das Netzwerkelement der Anwendungsfunktion, wobei die Anzeigeinformationen verwendet werden, um anzuzeigen, ob der Datenpfad erfolgreich hergestellt wurde.

8. Verfahren nach Anspruch 6 oder 7, wobei das Verfahren ferner Folgendes umfasst:
Senden einer Kennung eines Datennetzwerks, auf welches die erste Endgerätevorrichtung zugegriffen hat und/oder auf welches sie nicht zugegriffen hat, an das Netzwerkelement der Anwendungsfunktion.

9. Verfahren nach Anspruch 8, wobei die Identifikationsinformationen für Datennetzwerke und die Kennung des Datennetzwerks, auf welches die erste Endgerätevorrichtung zugegriffen hat und/oder auf welches sie nicht zugegriffen hat, durch das Netzwerkelement der Anwendungsfunktion verwendet werden, um das erste Datennetzwerk zu bestimmen.

10. Verfahren nach Anspruch 9, wobei das Verfahren ferner Folgendes umfasst:
Senden einer Kennung einer Anwendung an das Netzwerkelement der Anwendungsfunktion; und
wobei der Umstand, dass die Identifikationsinformationen für Datennetzwerke und die Kennung des Datennetzwerks, auf welches die erste Endgerätevorrichtung zugegriffen hat und/oder auf welches sie nicht zugegriffen hat, durch das Netzwerkelement der Anwendungsfunktion verwendet werden, um das erste Datennetzwerk zu bestimmen, Folgendes umfasst:
die Identifikationsinformationen für Datennetzwerke, die Kennung des Datennetzwerks, auf welches die erste Endgerätevorrichtung zugegriffen hat und/oder auf welches sie nicht zugegriffen hat, und die Kennung der Anwendung werden durch das Netzwerkelement der Anwendungsfunktion verwendet, um das erste Datennetzwerk zu bestimmen.

11. Kommunikationseinrichtung, umfassend:
eine Empfangseinheit (1201), die dazu konfiguriert ist, Identifikationsinformationen für Datennetzwerke von einem Netzwerkelement der Sitzungsverwaltungsfunktion zu empfangen, wobei die Identifikationsinformationen für Datennetzwerke eine Kennung von mindestens einem Datennetzwerk umfassen, welche das Bedienen einer ersten Endgerätevorrichtung an einem aktuellen Standort unterstützt, und das mindestens eine Datennetzwerk ein erstes Datennetzwerk umfasst; und
eine Sendeeinheit (1203), die dazu konfiguriert ist, als Reaktion auf das Bestimmen, basierend auf den Identifikationsinformationen für Datennetzwerke, dass die erste Endgerätevorrichtung nicht auf das erste Datennetzwerk zugegriffen hat, eine erste Nachricht an das Netzwerkelement der Sitzungsverwaltungsfunktion zu senden, wobei die erste Nachricht eine Kennung des ersten Datennetzwerks umfasst und die erste Nachricht verwendet wird, um einen Datenpfad zwischen einem Netzwerkelement der Benutzerebenenfunktion entsprechend dem ersten Datennetzwerk und einen Klassifiziererknoten herzustellen, wobei der Klassifiziererknoten ein Uplink-Datenpaket von dem ersten Endgerät an ein Netzwerkelement der Benutzerebenenfunktion entsprechend einem des mindestens einen Datennetzwerks gemäß einer Verteilungsregel verteilt oder ein Datenpaket von einem Netzwerkelement der Benutzerebenenfunktion entsprechend einem des mindestens einen Datennetzwerks an das erste Endgerät sendet.

12. Einrichtung nach Anspruch 11, wobei die Empfangseinheit ferner dazu konfiguriert ist, Anzeigeinformationen von dem Netzwerkelement der Sitzungsverwaltungsfunktion zu empfangen, wobei die Anzeigeinformationen verwendet werden, um anzugeben, ob der Datenpfad erfolgreich hergestellt wurde.

13. Einrichtung nach Anspruch 11 oder 12, wobei die Empfangseinheit ferner dazu konfiguriert ist, von dem Netzwerkelement der Sitzungsverwaltungsfunktion eine Kennung eines Datennetzwerks zu empfangen, auf welches die erste Endgerätevorrichtung zugegriffen hat und/oder auf welches sie nicht zugegriffen hat.

14. Einrichtung nach Anspruch 13, wobei die Einrichtung ferner Folgendes umfasst:
eine Bestimmungseinheit, die dazu konfiguriert ist, das erste Datennetzwerk auf den Identifikationsinformationen für Datennetzwerke und der Kennung des Datennetzwerks zu bestimmen, auf welches die erste Endgerätevorrichtung zugegriffen hat und/oder auf welches sie nicht zugegriffen hat.

15. Einrichtung nach Anspruch 14, wobei die Empfangseinheit ferner dazu konfiguriert ist, eine Kennung einer Anwendung von dem Netzwerkelement der Sitzungsverwaltungsfunktion zu empfangen; und
die Bestimmungseinheit speziell dazu konfiguriert ist, das erste Datennetzwerk basierend auf den Identifikationsinformationen für Datennetzwerke, der Kennung des Datennetzwerks, auf welches die erste Endgerätevorrichtung zugegriffen hat und/oder auf welches sie nicht zugegriffen hat, und der Kennung der Anwendung zu bestimmen.

## Revendications

1. Procédé de communication appliqué à un élément de réseau de fonction d'application, comprenant :
la réception (401) d'informations d'identification de réseau de données provenant d'un élément de réseau de fonction de gestion de session, dans lequel les informations d'identification de réseau de données comprennent un identifiant d'au moins un réseau de données qui prend en charge la desserte d'un premier dispositif terminal à un emplacement actuel, et l'au moins un réseau de données comprend un premier réseau de données ; et
en réponse à la détermination, sur la base des informations d'identification de réseau de données, du fait que le premier dispositif terminal n'a pas accédé au premier réseau de données, l'envoi (402) d'un premier message à l'élément de réseau de fonction de gestion de session, dans lequel le premier message comprend un identifiant du premier réseau de données, et le premier message est utilisé pour établir un chemin de données entre un élément de réseau de fonction de plan utilisateur correspondant au premier réseau de données et un noeud de classificateur, dans lequel le noeud de classificateur distribue un paquet de données de liaison montante du premier terminal à un élément de réseau de fonction de plan utilisateur correspondant à l'un de l'au moins un réseau de données selon une règle de distribution ou l'envoi d'un paquet de données provenant d'un élément de réseau de fonction de plan utilisateur correspondant à l'un de l'au moins un réseau de données au premier terminal.

2. Procédé selon la revendication 1, dans lequel le procédé comprend également :
la réception d'informations d'indication provenant de l'élément de réseau de fonction de gestion de session, dans lequel les informations d'indication sont utilisées pour indiquer si le chemin de données est établi avec succès.

3. Procédé selon la revendication 1 ou 2, dans lequel le procédé comprend également :
la réception, provenant de l'élément de réseau de fonction de gestion de session, d'un identifiant d'un réseau de données auquel le premier dispositif terminal a accédé et/ou n'a pas accédé.

4. Procédé selon la revendication 3, dans lequel le procédé comprend également :
la détermination du premier réseau de données sur la base des informations d'identification du réseau de données et de l'identifiant du réseau de données auquel le premier dispositif terminal a accédé et/ou n'a pas accédé.

5. Procédé selon la revendication 4, dans lequel le procédé comprend également :
la réception d'un identifiant d'une application provenant de l'élément de réseau de fonction de gestion de session ; et
la détermination du premier réseau de données sur la base des informations d'identification du réseau de données et de l'identifiant du réseau de données auquel le premier dispositif terminal a accédé et/ou n'a pas accédé comprend :
la détermination du premier réseau de données sur la base des informations d'identification du réseau de données, de l'identifiant du réseau de données auquel le premier dispositif terminal a accédé et/ou n'a pas accédé, et de l'identifiant de l'application.

6. Procédé de communication appliqué à un élément de réseau de fonction de gestion de session, comprenant :
l'envoi (401) d'informations d'identification de réseau de données vers un élément de réseau de fonction de gestion de session, dans lequel les informations d'identification de réseau de données comprennent un identifiant d'au moins un réseau de données qui prend en charge la desserte d'un premier dispositif terminal à un emplacement actuel, et l'au moins un réseau de données comprend un premier réseau de données ;
la réception (402) d'un premier message envoyé par l'élément de réseau de fonction d'application lorsqu'il est déterminé que le premier dispositif terminal n'a pas accédé au premier réseau de données, dans lequel le premier message comprend un identifiant du premier réseau de données ; et
l'établissement (403), sur la base du premier message, d'un chemin de données entre un élément de réseau de fonction de plan utilisateur correspondant au premier réseau de données et un noeud classificateur, dans lequel le noeud classificateur distribue un paquet de données de liaison montante provenant du premier terminal à un élément de réseau de fonction de plan utilisateur correspondant à l'un de l'au moins un réseau de données selon une règle de distribution ou envoie un paquet de données provenant d'un élément de réseau de fonction de plan utilisateur correspondant à l'un de l'au moins un réseau de données au premier terminal.

7. Procédé selon la revendication 6, dans lequel le procédé comprend également :
l'envoi d'informations d'indication vers l'élément de réseau de fonction d'application, dans lequel les informations d'indication sont utilisées pour indiquer si le chemin de données est établi avec succès.

8. Procédé selon la revendication 6 ou 7, dans lequel le procédé comprend également :
l'envoi, à l'élément de réseau de fonction d'application, d'un identifiant d'un réseau de données auquel le premier dispositif terminal a accédé et/ou n'a pas accédé.

9. Procédé selon la revendication 8, dans lequel les informations d'identification du réseau de données et l'identifiant du réseau de données auquel le premier dispositif terminal a accédé et/ou n'a pas accédé sont utilisés par l'élément de réseau de fonction d'application pour déterminer le premier réseau de données.

10. Procédé selon la revendication 9, dans lequel le procédé comprend également :
l'envoi d'un identifiant d'une application à l'élément de réseau de fonction d'application ; et
le fait que les informations d'identification du réseau de données et l'identifiant du réseau de données auquel le premier dispositif terminal a accédé et/ou n'a pas accédé sont utilisés par l'élément de réseau de fonction d'application pour déterminer le premier réseau de données comprend :
le fait que les informations d'identification du réseau de données et l'identifiant du réseau de données auquel le premier dispositif terminal a accédé et/ou n'a pas accédé, et l'identifiant de l'application sont utilisés par l'élément de réseau de fonction d'application pour déterminer le premier réseau de données.

11. Appareil de communication, comprenant :
une unité de réception (1201), configurée pour recevoir des informations d'identification de réseau de données provenant d'un élément de réseau de fonction de gestion de session, dans lequel les informations d'identification de réseau de données comprennent un identifiant d'au moins un réseau de données qui prend en charge la desserte d'un premier dispositif terminal à un emplacement actuel, et l'au moins un réseau de données comprend un premier réseau de données ; et
une unité d'envoi (1203), configurée pour, en réponse à la détermination, sur la base des informations d'identification de réseau de données, du fait que le premier dispositif terminal n'a pas accédé au premier réseau de données, envoyer un premier message à l'élément de réseau de fonction de gestion de session, dans lequel le premier message comprend un identifiant du premier réseau de données, et le premier message est utilisé pour établir un chemin de données entre un élément de réseau de fonction de plan utilisateur correspondant au premier réseau de données et un noeud classificateur, dans lequel le noeud classificateur distribue un paquet de données de liaison montante provenant du premier terminal à un élément de réseau de fonction de plan utilisateur correspondant à l'un de l'au moins un réseau de données selon une règle de distribution ou envoie un paquet de données provenant d'un élément de réseau de fonction de plan utilisateur correspondant à l'un de l'au moins un réseau de données au premier terminal.

12. Appareil selon la revendication 11, dans lequel l'unité de réception est également configurée pour recevoir des informations d'indication provenant de l'élément de réseau de fonction de gestion de session, dans lequel les informations d'indication sont utilisées pour indiquer si le chemin de données est établi avec succès.

13. Appareil selon la revendication 11 ou 12, dans lequel l'unité de réception est également configurée pour recevoir, de l'élément de réseau de fonction de gestion de session, un identifiant d'un réseau de données auquel le premier dispositif terminal a accédé et/ou n'a pas accédé.

14. Appareil selon la revendication 13, dans lequel l'appareil comprend également :
une unité de détermination, configurée pour déterminer le premier réseau de données sur la base des informations d'identification du réseau de données et de l'identifiant du réseau de données auquel le premier dispositif terminal a accédé et/ou n'a pas accédé.

15. Appareil selon la revendication 14, dans lequel l'unité de réception est également configurée pour recevoir un identifiant d'une application provenant de l'élément de réseau de fonction de gestion de session ; et
l'unité de détermination est spécifiquement configurée pour déterminer le premier réseau de données sur la base des informations d'identification du réseau de données, de l'identifiant du réseau de données auquel le premier dispositif terminal a accédé et/ou n'a pas accédé, et de l'identifiant de l'application.
